(19) Europäisches Patentamt
European Patent Office
Office européen des brevets

(11) **EP 1 896 275 B1**

(12) **EUROPÄISCHE PATENTSCHRIFT**

(45) Veröffentlichungstag und Bekanntmachung des Hinweises auf die Patenterteilung:
**24.04.2013 Patentblatt 2013/17**

(21) Anmeldenummer: **06742261.8**

(22) Anmeldetag: **24.04.2006**

(51) Int Cl.:
**B60B 31/02** (2006.01)

(86) Internationale Anmeldenummer:
**PCT/DE2006/000718**

(87) Internationale Veröffentlichungsnummer:
**WO 2006/114087 (02.11.2006 Gazette 2006/44)**

(54) **EINRICHTUNG ZUM ZENTRIEREN UND NACHSPANNEN VON EINGESPEICHTEN LAUFRÄDERN**

DEVICE FOR TRUING AND REGULATING THE TENSION OF SPOKED RUNNING WHEELS

DISPOSITIF POUR CENTRER ET RETENDRE DES ROUES A RAYONS

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **24.04.2005 DE 102005019120**

(43) Veröffentlichungstag der Anmeldung:
**12.03.2008 Patentblatt 2008/11**

(73) Patentinhaber: **Rugel, Christoph**
**79256 Buchenbach (DE)**

(72) Erfinder: **Rugel, Christoph**
**79256 Buchenbach (DE)**

(56) Entgegenhaltungen:
**EP-A- 1 188 583      FR-A- 1 009 704**
**US-A- 2 525 253      US-A- 2 601 120**

**Beschreibung**

Einrichtung zum Zentrieren und Nachspannen von eingespeichten Laufrädern

a) mit einer Trägervorrichtung zum festen Einspannen der Laufradachse,
b) einer Messvorrichtung zur Feststellung des Seiten - und Höhenschlags der Felge,
c) einer Einrichtung zum Anbringen des motorischen Nippelspanners an den Speichennippel
d) einer Vorrichtung zum manuellen Justieren der Speichenspannung, .
e) einer CPU - Steuereinheit mit interaktivem Display,

Daz Dokument EP 1 188 583 A1 spiegelt den Stand der Technik wider

a) Einrichtungen, die das Laufrad mutig zu seiner achsmutig gelegenen Radialebene fest einspannen, sind bekannt und weisen zusammmen oder getrennt folgende Nachteile auf:

-    Messung am selben radialen Felgensegment möglich, aber aufwendiges Justieren des Laufrades mittig zur Laufradradialachse
-    keine Vorrichtung zum Anbringen der Seiten - und Höhentaster für dasselbe in Laufradradialrichtung gelegene Felgensegment vorhanden
-    großer Fertigungsaufwand
-    große Toleranzen bei der Mittigstellung des Laufrades zu seiner Radialmittelebene

Die hier zur Anmeldung vorliegende Trägervorrichtung beseitigt diese Nachteile und zeichnet sich dabei durch folgend Eigenschaften aus:

sie spannt das Laufrad mutig zu seiner Radialmittelebene ein, zeigt die Seitenabweichungen beider Felgenseiten gleichzeitig relativ zu dieser Radialmittelebene an und misst den Höhenschlag am selben radialen Felgensegment in Axialrichtung, um dadurch das Zentrieren ohne Zentnerlehre, ohne zeitraubendendes Wenden des Laufrades während des Zentnervorgangs und ohne umständliches Zuordnen von an verschiedenen radialen Felgensegmenten gewonnenen Messwerten für Seitenschlag und Höhenschlag der Felge zu ermöglichen.

Das Laufrad wird durch eine neuartige Zug-Kippbewegung der beiden Träger simultan mittig zur Laufradachsmittelebene eingespannt, wobei die Messvorrichtung, von den Laufradträgern geführt, relativ zu einem radialen Felgensegment der jeweiligen Felgengröße simultan justiert wird.
Die etwa tischgroße, tragbare Konstruktion ist in einer flächenbetonten Bauweise möglich, welche außer durch Präzisionsgusskomponenten vor allem durch industrielle Standardprofile realisiert werden kann, wobei die symmetrische Einbindung der beiden Trägerseiten in die Gesamtkonstruktion die Toleranzen zusätzlich minimiert. Die Trägervorrichtung ist zudem für den in Baukastenweise realisierbaren vollautomatischen motorgesteuerten Zentnervorgang einge-richtet.

b) es sind Messvorrichtungen zum Feststellen des Seiten - und Höhenschlags der Laufradfelge bei fest eingespannter Laufradnabe bekannt, welche zusammen oder getrennt folgende Nachteile aufweisen:

-    aufwendiges Anbringen der Messtaster für Seiten-und Höhenschlag an die Laufradfelge
-    aufwendiges Justieren der Messtatser für Seiten-und Höhenschlag für die jeweilige Felgengröße
-    keine simultane achszentrierte Messung von Höhenschlag bzw. Seitenschlag des Laufrades auf demselben radialen Felgensegment
-    großer technischer Aufwand bei der mechanischen Messwertanzeige
-    Vergrößerung des Messfehlers durch zusätzliche Mechanik zwischen Messtaster und Messanzeige
-    Fehlen von Messskalen
-    Fehlen von Messkalen
-    keine distanztreue Anzeige der Seiten - und Höhenabweichungen der Laufradfelge
-    kein simultanes Ablesen der Messwerte möglich
-    keine Unterscheidung zwischen Felgendefekten und Seiten/Höhenschlag möglich

Die hier zur Anmeldung vorliegende Messvorrichtung beseitigt diese Nachteile, und zeichnet sich dabei durch die folgenden Merkmale aus:

sie misst verschiedene Laufradgrößen jeweils ohne zeitraubende, fehlererzeugende Justierarbeiten, zeigt die Messwerte im Verhältnis L 1 an, verfügt über eine Messskala, ist für Laufräder mit und ohne Reifen eingerichtet und hat ein einfache kostengünstige Bauweise sowie geringes Gewicht. Außerdem ist sie mit einem simultan ablesbaren Skalenfeld für Seiten- und Höhenschlag und einer Schnellpositioniervorrichtung für die Messtaster ausgestattet sowie in Baukastenweise für elektronische Messwerterfassung und Auswertung (Zentriercomputer) bis zu motorgesteuertem berührungslosem Messen eingerichtet,

Die radial parallel zur Laufradradialebene beweglich geführten Messtaster ermöglichen im Zusammenspiel mit einer Schnellspannvorrichtung für die Messtaster das einfaches Anbringen und Lösen der Messtaster an die jeweilige Laufradfelge. Der symmetrisch zur Laufradradialmittelebene anzeigende, lediglich durch direkt an den Messtastern angebrachte Messplättchen rechtwinklig zur jeweiligen Messrichtung gebildete Messspalt zeigt relativ zur Radialmittelebene auf einem lupenvergrößerten Skalenfeld mit z. Bsp. einem geeigneten Strichabstand von 0,1 mm und einer geeigneter Strichweite von 0,01 mm gleichzeitig beide Seitenschläge der Laufradfelge und gleichzeitig deren Höhenschlag jeweils im Verhältnis 1:1 an, wobei durch die gleichzeitige Anzeige beider Felgenseiten zusätzlich eine Unterscheidung zwischen Felgendefekten und Felgenschlag möglich ist. Mit einer lupenvergrößerte Skalenstrichweite von z. Bsp. 0,01 mm können mühelos Abweichungen der Laufradfelge von der idealen Radialmittelbene bis in einen Bereich von z. Bsp. 0,01 mm erkannt werden. Damit wird die Installation zusätzlicher Präzisionsmessinstrumente überflüsig.

Ferner können durch Lösen der Feststellvorrichtung des parallel zur Laufradradialmittelebene auf dem Messkörperträger beweglich geführten Messkörpers die beiden Messtaster für Seitenschlag durch an ihnen installierte, über den beweglichen Messkörper federnd wahlweise an der Felgenober-oder Unterseite anliegende Höhentaster die Höhenabweichungen relativ zu dem auf dem Messkörperträger fest angebrachten Skalenfeld mit den rechtwinkligen Messplättchenkanten der Höhentaster anzeigen. Zusätzlich können bei seitengefurchten Laufradfelgen die Messtaster für Seitenschlag in den Furchen angebracht werden, sodass, ebenfalls bei gelöster Festellvorrichtung des Messkö-pers, Höhenabweichungen der Felge simultan über die Seitentaster erfasst und zur Anzeige gebracht werden können.

Außerdem kann der Höhenschlag über ein weiteres, mit einer federnd an der Felgenunterseite laufradaxialbeweglich angebrachten Rolle fest verbundenes und im Messspalt über dem Skalenfeld vertikal bewegtes Messplättchen mit dessen Kante angezeigt we:den. Diese Messform kann z.Bsp. bei schnellem Gebrauch der Zentriervorrichtung gewählt werden, ,wenn die durch das simultane, permanent abstandsgleiche Mitführen der Messtaster für Seiten-und Höhenschlag gegebene hohe Messsicherheit, wie sie mit den hier beschriebenen ausschließlich seitentastergeführtem Messverfahren möglich ist, nicht im Vordergrund steht.

Zusätzlich zu dieser Grundausstattung können nun nach dem Baukastenprinzip elektronische Distanzsensoren an den Messtastern angeschlossen werden, diese wiederum an ein z.Bsp. am Messkörperträger installiertes interaktives Display mit Mikrocontroller, welches außerdem mit einer optoelektronischen Vorrichtung am oberen Ende des Messkörpers zum Zählen der Speichen bei manuell oder motorisch bewegtem Laufrad verbunden werden kann, womit eine eindeutige elektronische Zuordnung der Messwerte zum Messort möglich wird. Der auf diese Weise installierte manuell bedienbare Zentnercomputer hat den Vorteil, simultan achsmutige und achsradial gelegene Messwerte zu liefern und außerdem technisch einfach, platzsparend, mobil und leicht gebaut zu sein.

Abschließend kann nun, ebenfalls nach dem Baukastenprinzip eine zusätzliche Erweiterung zu einer vollautomatisch arbeitenden Zentnervorrichtung bei fest eingespanntem Laufrad stattfinden. Dazu wird erstens der Messkörper durch einen Messkörper gleicher Größe ersetzt, der mit berührungslos arbeitenden, für Laufräder mit und ohne Reifen gleicherweise geeigneten, symmetrisch zur Laufradradialmittelebene angeordneten optoelektronischen Flächenstrahlgebern bzw. Flächenstrahlsensoren arbeitet und motorisch auf den am Messkörperträger angebrachten Führungen automatisch in die optimale Messposition bewegt werden kann; zweitens treibt eine motorgetriebene, an der Zentnervorrichtung befestigte Antriebsrolle das eingespannte Laufrad über die Felgenunterseite- bzw. Reifenunterseite an, drittens werden die motorgetriebenen Nippelspanner am Zentnerkörper bei den dazu eingerichteten Vorrichtungen der beiden Laufradträger installiert und alle drei Komponenten ebenfalls mit dem Mikrocontroller verbunden. Manuelle Tätigkeiten während des Zentriervorgans beschränken sich damit auf das Abdrücken der Laufradfelge.

In einer weiteren Ausgestaltung der Erfindung wird zum berührungslosen Messen der Seiten-und Höhenabweichungen der Laufradfelge eine optoelektronische Flächenstrahlvorrichtung, bestehend aus zwei in einem Winkel von 45° orthogonal symmetrisch zur Laufradradialebene angeordneten Flächenstrahlgebern eingerichtet, so dass sich die Flächenstrahlen rechtwinklig zur Laufradradialebene dort in einer gemeinsamen Linie schneiden; die Flächenstrahlnehmer sind parallel symmetrisch zur Laufradradialmittelebene angeordnet, sodass die Seitenabweichungen der sich innerhalb der Strahlflächen befindenden Laufradfelge im Verhältnis 1:1 abgebildet werden können. Zur eindeutigen Zuordnung der gemessenen Strecken zu Höhen oder Seitenschlagsbewegungen der Felge steht zum einen die Differenz der linksseitig bzw. rechtsseitig gemessenen Strecken, zum anderern der Abgleich mit einem dritten, orthogonal zur Laufradradialebene verlaufenden, die gemeinsame Kreuzungslinie der anderen Flächenstrahlen durchdringenden Flächenstrahl zur Verfügung, sodass aus den gemessenen Seitenstrecken die Höhenabweichungen eindeutig herausgerechnet werden können. Die hier beschriebene berührungslose Messung mit Flächenstrahlen hat gegenüber anderen berührungslosen Messmethoden zum einen den Vorteil, z. Bsp bei der Messung gebrauchter Laufräder Seitenabweichungen von insgesamt 40 mm und mehr gleichbleibend genau anzeigen zu können, zum anderen, dass die Messvorrichtung durch paralleles Verschieben entlang der Laufradradialebene auch motorgesteuert in einfacher Weise der jeweiligen Felgengröße bzw. Felgenbeschaffenheit angepasst werden kann und die Zentnereinrichtung damit für das vollautomatische Einmessen beliebiger Laufradgrößen mit und ohne Laufradreifen eingerichtet ist.

c) Bisher bekannte Einrichtungen zum Anbringen des motorgetriebenen Nippellspanners an den Speichennippel weisen jeweils einen oder mehrere der folgenden Nachteile auf:

- aufwendige Justierarbeiten zum Einstellen des Arbeitspunktes für die jeweilige Felgengröße
- aufwendige technische Gesamtkonstruktion
- ungenaues Drehen der seitwärts auf dem Nippel einrastend angebrachten, verklemmend drehenden Schraubernuss
- ungenaues Arbeiten der Getriebemotorsteuereinheit
- geringe Beweglichkeit der sphärischen Schraubernuss
- erhöhte Verschleißerscheinungen durch sphärisch bewegliche und verklemmend kraftschließend arbeitenden Schraubernuss
- zusätzliche Messvorrichtungen für die Speichenspannung notwendig

Die bisher bekannten motorischen Nippelschraubereinrichtungen zum Zentrieren des Laufrades finden sich bei Einrichtungen mit und ohne festeingespannter Laufradachse. Nachteilig sind beidesmal ein sehr hoher technischer Aufwand zusammen mit aufwendigen Justierarbeiten, um den kompletten Schraubmechanismus für den eigentlichen Schraubvorgang und die jeweilige Felgengröße vorzubereiten. Außerdem wird die erforderliche Feinjustierung zum passgenauen Aufsetzen der Schraubnuss in Achsrichtung des Speichennippels mittels zusätzlicher, technisch aufwendiger Sensormechanismen erreicht. Darüberhinaus erzeugt das finale seitliche Einrasten der sphärisch in geringem Umfang beweglichen Spannnuss, die den Speichennippel verklemmend erfasst und dreht, hohen Verschleiß sowie Genauigkeitstoleranzen bezüglich der Drehposition des Speichennippels, wodurch das Zentrieren des Laufrades mit hoher Genauigkeit sowie die exakte Messung der Speichenspannung mittels Bewegen der Spannnuss unmöglich ist. Eine bisherige Hauptschwierigkeit besteht sicherlich im Anbringen der Schraubernuss an den Speichennippel, da hier die unterschiedlich zur Laufradradialebene verkippten Nippelachsen im Zusammenspiel mit unterschiedlichen Laufradgrößen, Speichenanzahlen und Felgentypen, sowie Veränderungen der Nippelachsstellung während des Spannens maximale Anpassung an die jeweiligen 'Nippelver-hältnisse' bei minimalem technischen Aufwand eine optimale Arbeitsgenauigkeit zu erreichen.

Zum reversiblen Anbringen des motorgetriebenen Nippelspanners an den Speichennippel wird mindestens eine Antriebsbewegung auf die Laufradradialebene zu und wieder von ihr weg eingerichtet.

Zum genauen verschleißarmen Schrauben wird eine mit geringem Spiel auf dem Speichennippel in dessen Achsialrichtung aufsitzende und möglichst dessen vier Eckkanten umfassende, geschlitzte Nippelspannernuss verwendet, die in exakten, von einem direkt angeschlossenen Winkelgeber kontrollierten Drehwinkeln schrauben kann. Damit ist auch die direkte Messung der Axialspannung der Speiche über den Motorstrom bzw. die Motorspannung möglich.

Zentrales Element beim Anbringen der Schraubnuss auf den Speichennippel bildet die Gleitführungsebene, welche aus parallel engstehenden Führungen besteht, die auf die jeweilige Speiche geschoben werden, sich dabei deren Kippstellung anpassen, schließlich mit ihrer Verbindungsseite parallel zur Speichenachse anliegen, sodass die Nussachse der an ihnen befestigten Schraubnuss mit der Nippelachse zusammenfällt, wobei günstiger-weise die Schraubnuss knapp über dem Speichennippel steht, um in einer finalen Bewegung entlang der Speichenachse auf denselben aufgeschoben zu werden. Da hierzu Nuss- und Nippelkanten möglichst parallel ausgerichtet sein müssen und die maximal mögliche Verdrehstellung dabei 45° beträgt, wird die drehende Schraubnuss gegen den Nippelvierkant gesenkt, wobei eine optimale Abstimmung beider Bewegungsgeschwindigkeiten aufeinander zusammen mit einer Bewegungs-kontrolle über die Motorströme bzw. Motorspannung sowie einer elastischen Vorrichtung für die Schraubnuss das erfolgreiche Erfassen des Speichennippels von oben ermöglichen.

Die Aufsetzbewegung der Schraubnuss auf den Speichennippel kann zusätzlich mittels einer Sensorvorrichtung für den erfolgreichen Nippelkontakt der Schraubnuss sowie einer Felgenkontaktsensorvorrichtung, wie im Zeichnugsteil beschrieben, unterstützt werden. Die Gleitführungsvorrichtung mit angebrachter Schraubnuss wird mit oder ohne montierter Getriebemotoreinheit in verschieden möglichen reversiblen Bewegungsabläufen zum einen auf die Speiche bis zum Erreichen der achsparallelen Position geschoben, zum anderen durch speichenachsparallele, den Speichennippel erfassend Verschiebung, in der endgültigen Schraubposition angebracht.

Bei Vorrichtungen mit extern fest angebrachter, auf unterschiedliche Felgengrößen evtl. verstellbar eingerichteter Motorgetriebeeinheit findet die Drehmomentübertragung zuran der Gleitführungsvorrichtung befestigten Schraubnuss mittels einer biegsamen Welle statt. Die reversiblen Bewegungsabläufe werden für eine translatorische Antriebsbewegung und für eine roatatorische Antriebsbewegung jeweils verschieden ausgeführt.

Bei der translatorischcn Antriebsbewegung wird die gleitgeführte Schraubnussvorrichtung zunächst geradlinig in feststehender, frontaler Richtung zur Laufradradialebene auf die Speiche geschoben, wobei die bereits oben erwähnten Gelenkvorrichtungen für die Verkippungsachsen relativ zur Laufradradialebene die gleitgeführte Schraubnussvorrichtung bei geradliniger Bewegungsrichtung parallel zur Speichenlage ausrichten; dabei werden über die parallel zur Laufradradialebene linearbewegliche Vorrichtung die Ablenkungen seitwärts zur Bewegungsrichtung geführt, welche beim Ausrichten der Gleitführung entlang der Speiche aufgrund der radialen Abweichungen vom Achszentrum der von der Gleitführungsvorrichtung bewegten laufradradialparallelen Verkippungsachse. Seitliche Ablenkungen entstehen auch beim anschließenden Absenkungsprozess der gleitgeführten Schraubnussvorrichtung entlang der Laufradspeiche, wenn die Abwärtsbewegung nicht speichenaxialparallel gerichtet ist, sondern z.Bsp. senkrecht zur frontalgerichteten Bewegungsrichtung. Das kann der Fall sein, wenn beide Bewegungsabläufe, paralleles Anbringen und Absenken, nicht mit zwei getrennten, sondern einer einzigen Motorvorrichtung bewerkstelligt werden. In diesem Fall wird die geradlinige, frontal zur Laufradradialebene gerichtete Vorwärtsbewegung bei parallelem Anliegen der gleitgeführten Schraubnussvorrichtung an der Laufradspeiche zum Aufsetzen der Schraubnuss auf den Speichen nippel entlang der Speiche mittels geeigneter Gelenkvorrichtungen in eine speichenachsparallele abwärtsgerichtete Bewegungsrichtung überführt.

Bei der reversiblen rotatorischen Antriebsbewegung erfolgt das speichenachsparallele Ansetzen der gleitvorrichtungsgeführten Schraubnuss sowie das Aufsetzen auf den Speichennippel im günstigsten Fall aus einer Drehbewegung heraus. Über ein kippgelagertes, parallel zur Laufradradialebene etwa auf Nippelhöhe ausgerichtetes motorgetriebenes Radialgelenk, welches zusätzlich in einer Ebene orthogonal zur Laufradradialebene gelegen jeweils parallel sowie senkrecht zur Laufradradialebene mit elastischen Bewegungsvorrichtungen linear gleitlagergeführt ist, wird eine stabähnliche Haltevorrichtung zunächst orthogonal zur Laufradradialebene auf die Speiche zubewegt und schließlich achsparallel an dieser anliegend ausgerichtet. Beim gleitvorrichtungsgeführten Aufschieben auf die Speiche werden die bereits beim translatorischen Bewegungsfall erzeugten Kippbewegungen und seitlichen Verschiebungen diesmal über die Kipplagerung sowie die beiden elsastisch geführten Gleitlagervorrichtungen der Radialachse aufgefangen.

Nach dem Anliegen an der Speiche wird die gleitvorrichtungsgeführte Schraubnuss dann durch Fortsetzen der Drehbewegung entlang der Speichenachse auf den Speichennippel geschoben, wobei die Radialachse über ihr entsprechendes Lineargelenk nach hinten verschoben wird und dabei leichten Druck auf die Laufradspeiche ausübt. Beim Abheben der Schraubnuss vom Speichennippel durch Beginnen der rückwärtsgerichteten Drehbewegung garantiert dieser Andruck ein verkantungsfreies Lösen der Schraubnuss in Nippelachsialrichtung. Zudem kann über eine Feinjustiertungsvorrichtung die Arbeitspostion des Radialgelenks relativ zur Laufradradialebene z.Bsp, für Dauerbetrieb mit Seitenschlagstoleranzen von ca. +/- 8mm bedarfsorientiert eingestellt werden. Die Verschiebung des Radialgelenks parallel lotrecht zur Laufradradialebene zwecks Anpassung an verschiedene Laufradgrößen kann manuell oder motorgetrieben erfolgen.

d) Vorrichtungen zum manuellen Justieren der Speichenspannung sind bekannt, welche sich jedoch auf das bloße manuelle Anziehen bzw. Lockern der Speichennippel beschränken. Da aber die Kenntnis der Speichenspannung nicht zuletzt auch zum Bedienen von Zentriercomputern notwendig ist und die Torsion der Speiche bei jedem Anziehen des Nippels vermieden werden muss, ist die arbeitssparende, platzsparende und kostensparende Vereinigung aller drei Abläufe, Nippel-spannen, Speichenspannung Messen und Torsionskontrolle in einem Gerät vorteilhaft. Gerade bei der Messung der Speichenspannung sind bekannte Vorrichtungen wie 3-PunkteMessung am Speichendraht, mechanische Zugmessung oder akustische Messung durch die Wahl des Mess-punktes und/ oder das Überkreuzen der Speichen zwangsläufig ungenau. In der hier zur Anmeldung vorgelegten Vorrichtung wird dagegen die axialen Zugspannung der Speiche gemessen.

Die Vorrichtung besteht aus einem zylindrischen Basiskörper mit Nippelspannernuss, Speichenführung und Drucksensoren, einem mittleren Drehkörper sowie einer Kopfeinheit mit Stromversorgung, Display, Signalgeber und Torsionsanzeige. Die Drehbewegungen der Schraubernuss können auch motorgetrieben erfolgen, wozu die gesteuerte Antriebseinheit der hier an anderer Stelle zur Anmeldung vorgelegten motorgetriebenen Nippelschraubervorrichtung manuell bedienbar an der Speiche eingesetzt wird. Ausführungsbeispiele der Erfindung ist in den Zeichnungen dargestellt und wird im Folgenden näher beschrieben.

Es zeigen:

*Fig.1* eine perspektivische Darstellung der Konstruktionselemente des Zentrierständers,
*Fig.2* eine Ansicht des symmetrischen Zug/Kippmechanismus des Zentrierständers,
*Fig:3 a,b,c* eine Darstellung des Messkörpers und seiner Elemente,
*Fig.4 a,b,c,d,e* perspektivische Darstellung, Seitenansicht und Bestandteile einer Ausführung des translatorisch bewegten Nippelschraubers sowie Darstellung des rotatorisch bewegten Nippelspanners,

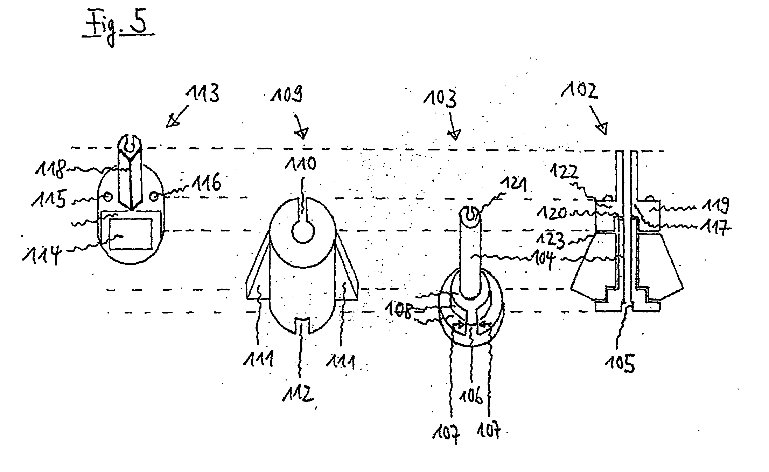

Fig.5 Aufbau und Bestandteile des manuellen Nippelspanners

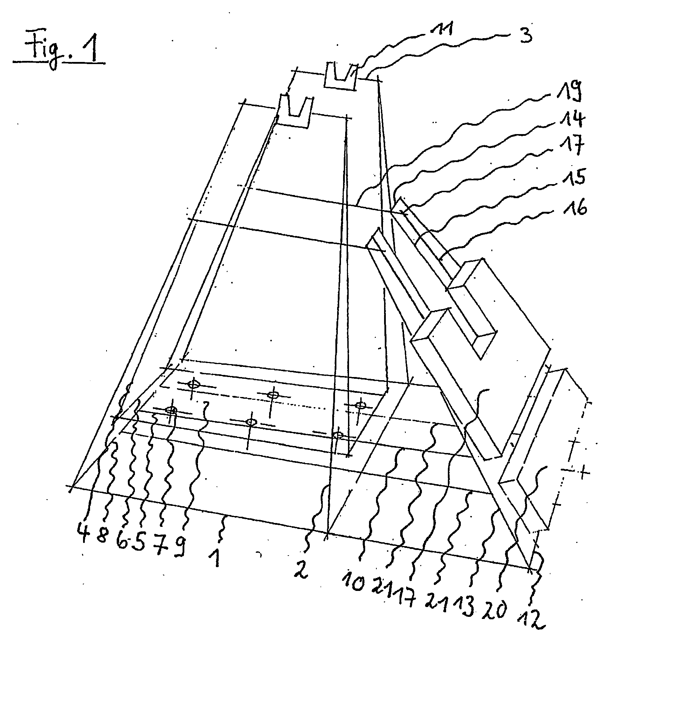

*Fig. 1.* Die Skizze zeigt die jeweils trapezförmigen, symmetrisch zueinander liegenden äußeren Trägerplatten, jeweils begrenzt durch die Linien **1,2,3** bzw. **3,4,5**. Die Linien **5** und **6** bildern über die Rohr-führungen **7** einen Boden, der vertikal beweglich im zwischen den Linien **8** gelegenen starren Körper **9** befestigt ist. Dabei stellen die Linien **1,3,5** radial bewegliche Gleitführungen dar. Linie **10** bezeichnet eine Stangenvorrichtung zum Heben und Senken des Bodens **5,6 im** Körper **9**. Ziffer **11** bezeichnet die ebenfalls radial beweglich gelagerten Aufnahmevorrichtungen für die Laufradnabe. Die Linien **12,13,14,** und 15 bezeichnen die symmetrische, in der oberen Hälfte u-förmige Trägerplatte mit den Gleitführungen **16** für den Messkörper **17,** die vom über die gesamte Breite der Trägerkonstruktion verlaufenden radialen Drehgelenk **12** aus an ihren beiden symmet-risch zueinander gelegenen oberen Punkten **18** an der an den beiden Außenträgern **1,2,3** befestigten Haltevorrichtung **19** gleithaftend anliegt. Die Bedieneinheit mit Display **20** ist am unteren Ende des Halteträgers angebracht.Äußere und innere Trägerplatten sowie der Boden der Trägerkonstruktion können mit Vorrichtungen zum Einbau motorgetriebener Nippelspanner eingerichtet sein.

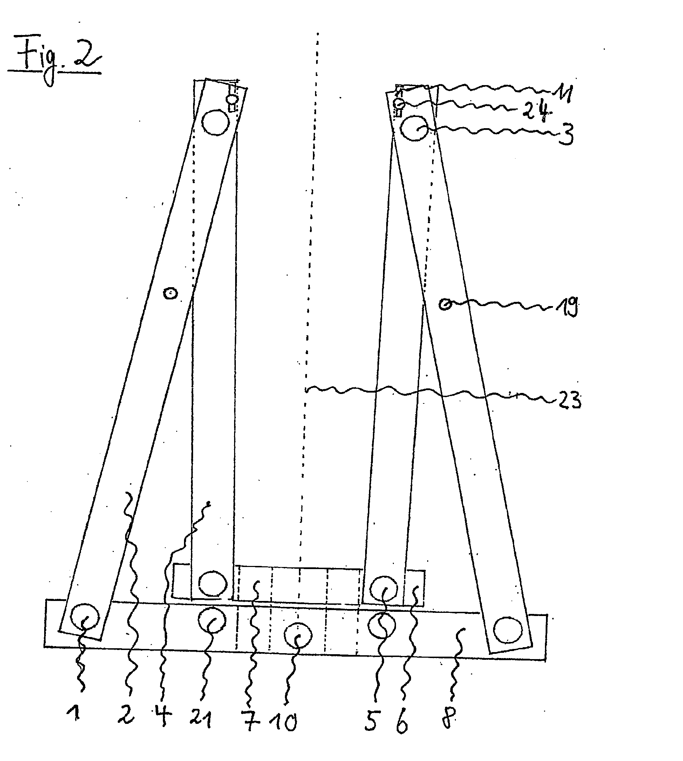

*Fig.2* Die frontrale Ansicht in einer Darstellung ohne Messkörperträger **12,13,14,15**, Messkörper **17** und Display-Bedieneinheit **20** zeigt eine Ausführung mit den Präzisionsrohren **1,3,5,10,19,21,22**, sowie den Rechteckrohren **2,4,6,8**. Ziffer 7 bezeichnet die symmetrisch zur Laufradachsmittelebene **23** angeordneten Rohrführungen, wobei der Körper **9** hier durch in einer Ebene hintereinander geordnete Rechteckrohre **8** ausgeführt ist, welche zugleich die Gelenkrohre **1,** das Bewegungsstangenrohr **10** sowie die beiden ebenfalls symmetrisch zur Achse **23** angeordneten Rohre **21** zur Stabilität und Maßtreue der Gesamtkonstruktion, denn wie aus *Fig. 1* ersichtlich bilden hier die Rohre **1,10** und **21**sowie die Haftgleitungsrohre **19** die Grundlage, für die maßgenaue Montage des Messträgers **12,13,14,15**. Genauer als in *Fig.1* ist hier die Aufnahmevorrichtung für die Laufradnabe **11** durch die oberhalb des Gelenkrohrs **3** verlaufende radiale Wellengelenk **24** dargestellt, das, fest mit einer v-förmigen Platte verbunden, als Aufnahmevorrichtung **11** der Laufradachse dient. Es ist erkennbar, das sich die Haftgleitvorrichtungen **19** während der Zug/Kippbewegung auf Kreislinien bewegen müssen. Der gleithaftend an deren Enden jeweils mit seinen beiden U-Flanken achsradialparallel aufliegende, in seinem Radial-gelenk **12** beweglich gelagerte Messkörperträger **12,13,14,15** wird vorab für eine optimale mittlere Höhe der Haftgleitvorrichtungen **19** ausgerichtet, sodass seine höher gelegenen Mess-taster die bei minimaler bis maximaler Laufradnabenweite enstehenden, laufradachsradialen Richtungsabweichungen minimimalisieren können, wobei der entstehende Fehler am radialen Felgensegment innerhalb der Tastsensorquerschnitte liegt und somit eine simultane, laufradachsradialgerichtete Seiten-und Höhenschlagsmessung des Laufrads möglich ist.

*Fig.3 a,b,c:*
Die Skizze zeigt den Messkörperträger **12,13,14,15 ,** die Display-Bedieneinheit **20** mit den Bedienfeldern **25** und Display **26**. Zu erkennen ist ferner die Gleitführung **16** auf welcher der Messkörper **17** über die Gleitvorrichtungen **50** beweglich angebracht ist. Mittig zur radialen Laufradachsmittelebene **23** sind die Speiche **27,** die Felgenseiten **28** sowie der Laufradreifen **29** dargestellt. Die in den Gleitlagern **30** mit Andruckvorrichtungen **35** versehenen beweglichen Taststifte **31** führen die Anzeigeplättchen **32** fest mit sich, welche wiederum im Skalenfeld **34** erscheinen und eine von der Felgenbreite abhängige Spalt-größe mittig zur Laufradradialebene **23** aufweisen. Die Anzeigeplättchen **32** können im Skalenfeld **34** auch simultan den Höhenschlag der Felge anzeigen, entweder wenn die Tastspitze in der Seitenfurche einer Felgensseite **28** geführt wird und gleichzeitig mittels des Einstellknopfs **36** die Gleitfiihrungsbremsen **37** gelöst werden, sodass über die Gleitlager **30** der Messkörper **17** bei Höhenausschlägen mitgeführt wird, so dass diese über die Unterkante der Anzeigeplättchen **32** im Skalenfeld angezeigt werden. Andererseits kann mittels der über die Präzisionsbohrungen **39** arretierbare Schwenkträger **40** über einen ebenfalls drehbaren Taster **41** an der Felgenober - bzw. Unterseite mittels der Andruckvor-richtungen **42** bzw. **43** zur gleitfähigen Auflage gebracht werden. Die letzten beiden Verfahren haben den Vorteil, dass die Messtaster sich gegenseitig immer mitführen und deshalb auch immer an derselben Felgenposition messen.

Grundsätzlich besteht aber auch die Möglichkeit, Seiten- und Höhenschlag unabhängig voneinander zu messen, indem die mittels der Gleitführungen **45** bewegliche und mittels Druckvorrichtungen **46** federnd am Laufrad **29** oder der Felgenunterseite angebrachteMessrolle **44** über das mit dem Einstellknopf **47** verschiebbare Messplättchen **48** den Höhenschlag im Skaklenfeld **34** simultan mit den Messplättchen **32** für Seitenschlag zur Anzeige bringt. Über dem Skalenfeld ist ein Lupenglas **49** zur Steigerung der Ablesegenauigkeit angebracht.

Zusätzlich können noch zwischen den Gleitführungen **51** bzw. **30** des Messkörpers elektronische Distanzsensoren angebracht werden, deren Messdaten am Display **26** über die Bedienfelder **25** der Bedieneinheit **20** abgerufen werden können. Zu diesem Zweck ist auch an den oberen Enden des Messkörpers eine justierbare elektrooptische Zählvorrichtung **50** angebracht, mit deren Hilfe eine Mikrocontrollereinheit die Messwerte eindeutig Felgenorten zuordnet und die nötigen Arbeitsschritte zum Zentrieren relativ zur Laufradmittelachse errechnet.

Ferner ist der Messkörper **17** abnehmbar von der Trägerplatte **12,13,14,15** ausgeführt, sodass an seiner Stelle ein Flachstrahlmesskörper **59** mit einer optoelektronischen Messeinheit für Flächen-strahlmessungen installiert werden kann, der aus den Flächenstrahlgebern **52,54,56** und den Flächenstrahlnehmern **53,55,57** in Verbindung mit einem Mikrocontroller und des Displays **26** mit Steuervorrichtung **25** der Bedieneinheit **20** besteht, wobei hier die Strahleinheiten **52,53** sowie **54,55 in** einem Winkel von 45° orthogonal zur Laufradmittelachsc **23** angeordnet sind, die Strahleinheit **56,57** dagegen 90° orthogonal zur Laufradmittelachse **23**. Die Winkelstellung von 45° ist bevorzugt, weil hier Abweichungen der Felge orthogonal zur Achse **23** 1:1 auf den parallel orthogonal zur Achse **23** eingerichteten Flächenstrahlnehmern **53,55** abgebildet werden. Die Flächenstrahleinheit **56,57** detektiert Speichen, Ventil und die Höhenabweichungen der Laufrad-felge. Im Abgleich der Messwerte durch den Mikrocontroller ist somit eine eindeutige Zuordnung der detektierten Abweichungen in **53,55** möglich. Prinzipiell ist eine der beiden Flächenstrahleinheiten **52,53** bzw. **54,55** überflüssig,der hier dargestellte zweifache Einsatz ist für eine höhere Betriebssicherheit des Messkörpers sowie zur Fehlerminimierung geeignet. Somit wird eine vollständig berührungslose Messung der Seiten - und Höhenschläge der Laufrades möglich. Selbstverständlich kann nun die automatische Justierung des Messkörpers für die jeweilige Felgengröße durch eine motorgetriebene Vorrichtung, den Messkörper **59** entlang der Führungs-vorrichtungen **16** bewegend, in Koordination mit dem Mikrocontroller erreicht werden. In Koordination mit einer ebenfalls über den Mikrocontroller gesteuerten Antriebs rolle für das Laufrad ist nun der vollautomatische Einmessprozess des Laufrades möglich.

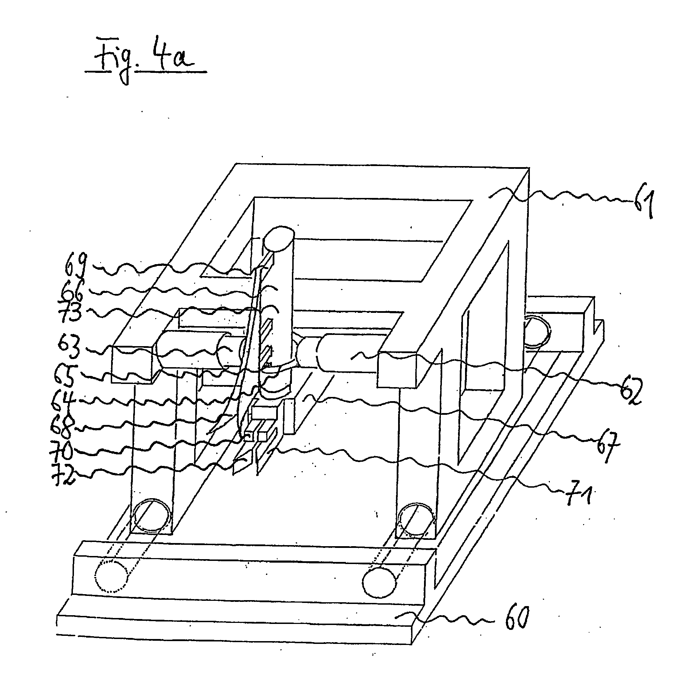

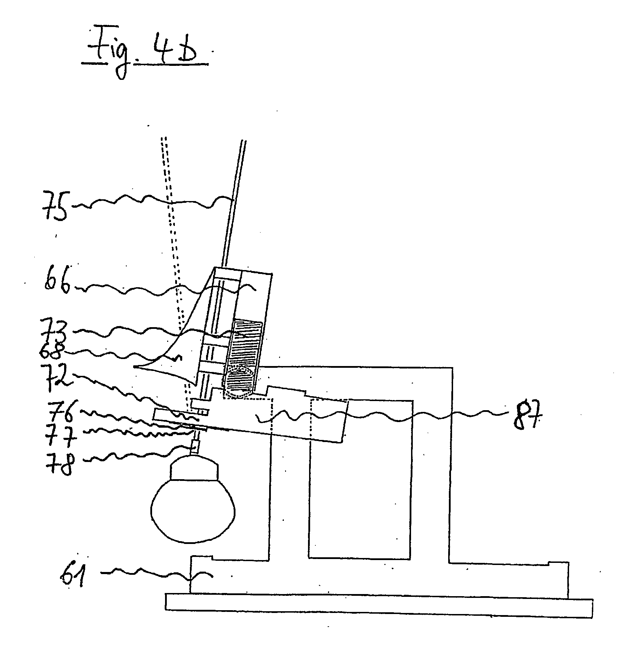

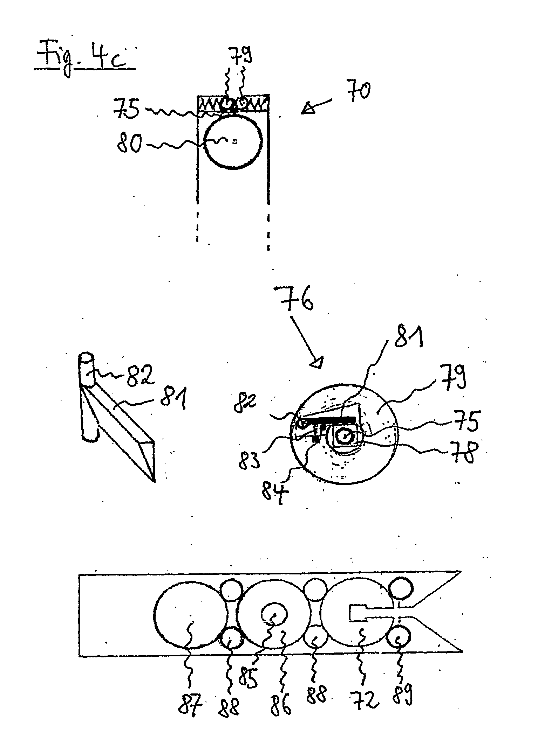

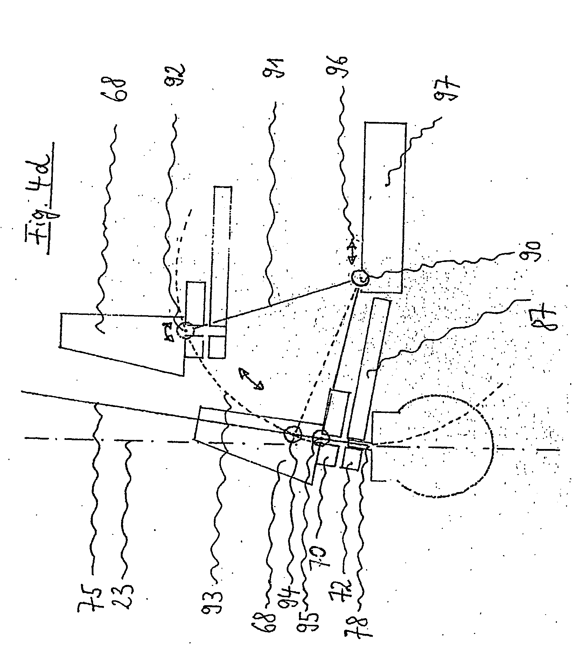

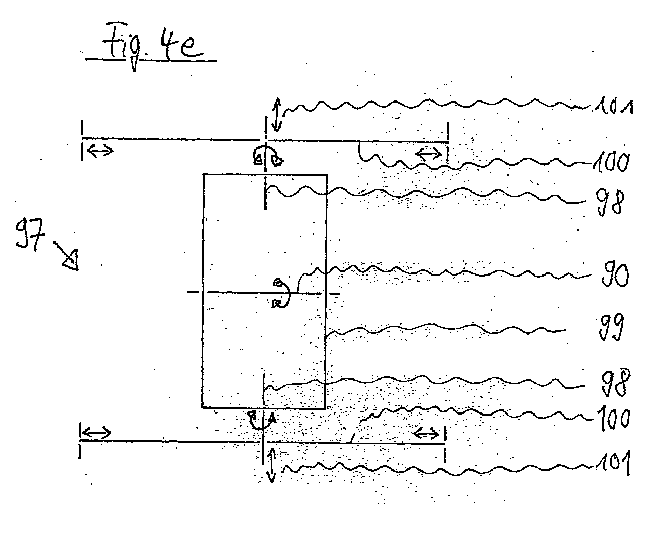

_Fig. 4 a,b,c,de:_

Die Skizze in _Fig.4a_ zeigt die perspektivische Ansicht eines Ausführungsbeispiels des motorisierten Schraubkörpers mit beweglicher Trägereinheit. Auf einer Grundplatte **60** ist hier die in Laufradaxialrichtung zur Laufradradialebene hin bewegliche Trägerkonstruktion **61** mit der beidseitigen Haltevorrichtung **62,** an der durch die seitlich und radial bewegliche Vorrichtung **63** mit Halteträger **64** und Radialgelenk **65** ein Kardangelenk eingerichtet ist, an dem über den Montagekörper **66** der Schraubkörper **67** sowie die Gleitführungs Vorrichtung **68** fest angebracht sind. Bei einer Bewegung der Trägerkonstruktion auf die Laufradradialebene zur jeweiligen Speiche hin passt sich der Schraubkörper mithilfe der Gleitführungsvorrichtung der Schräglage der jeweiligen Speiche über eine simultane Verkippung des Kardangelenks in Laufradaxialebene und orthogonal zu dieser an und liegt schließlich an der Speiche **75** an, sodass über die Vorrichtungen **69,70** und **71** eine mittige Lage der Schraubernuss **72** über dem Speichennippel in dessen Achsrichtung erreicht wird. Die Haltevorrichtungen **69** sind mit Vorrichtungen zum gleitfähigen, reversiblen Anhaften an die Speiche ausgestattet, Vorrichtung **70** ist zusätzlich mit einem Torsionsmesser für die Speiche eingerichtet.

Das Aufsetzen der Schraubernuss **72** auf den Speichennippel **74** gelingt durch Verschieben mittig zur Nippelachse längs der Speiche mittels eines Antriebs **73,** der im Montagekörper **66** einge-richtet ist. Dabei dreht sich die Schraubernuss mit 8 rpm langsam genug, um nach Ertasten mit-hilfe des Nippelpositionssensors **76** über den Speichennippel gleiten zu können; diese Bewegung wird dann mittels des Felgenkontaktsensors **77** abgeschaltet und der Nippelschrauber kann zur Schraubarbeit übergehen. Dabei misst ein im Schraubkörper **67** untergebrachter Winkelsensor **87** direkt die vom Mikrocontroller vorausberechnete Drehung der Schraubernuss, beim Entfernen vom Speichennippel wird damit der Schra ubernusss chlitz reversibel in die Ausgangsposition gedreht, in entgegengesetzter Bewegungsrichtung hebt der Antrieb **73** die Schraubernuss vom Speichennippel und die Tägerkonstruktion **61** fährt in ihre Ausgangsposition zurück.

**In Fig.4c** zur Verdeutlichung eine Ausführung des Torsionsmessers **70** mit der zwischen zwei federnd geführten Kugeln **79** und dem Winkelgeber **80** eingerasteten Laufradspeiche **75** in Aufsicht. Der druckhaftend an der Speiche **75** anliegende Winkelgeber **80** nimmt deren Drehbewegungen auf. Außerdem der in Aufsicht skizzierte Nippelpositionssensor **76** mit dem innerhalb des Grundkörpers **79** eingerichteten Tastarms **81** mit Radiallager **82,** Rückholfeder **83** sowie elektrischer Kontaktvorrichtung **84**. Der nach unten verjüngte Tastarm **81** liegt während der simultanen Senk - und Drehbewegungder Schraubernuss **72** zunächst mit der schmalen unteren Seite am beliebig drehpositionierten Speichennippel **78** an und dreht sich mit der rechtwinklig zu seiner Kontaktposition eingestellten Schraubernuss **72** bis zur parallel zu einer der Speichen-nippelvierkantseiten verlaufenden Kontaktposition mit. Ferner ist in Aufsicht die untere Ebene des Schraubkörpers **67** mit der Schraubernuss **72**, dem mit der Getriebewelle **85** verbundenen Antriebsrad **86,** einem Winkelgeber **87** sowie Übertragungsrädern **88** bzw Stabilisationsrädern **89** skizziert. Prinzipiell kann die Aufsetzbewegung des Nippelschraubers auf den Speichennippel innerhalb der gleitgeführten Vorwärtsbewegung mithilfe zusätzlicher Gelenkvorrichtungen erfolgen. Ebenso sind die in **Fig4c** beschriebenen sensorischen Elemente zum Kontaktieren des Nippelschraubers bzw, zum Stoppen der Aufsetzbewegung nicht zwingend notwendig, ebenso sind hier z.Bsp. auch geeignete Federvorrichtungen in Kombination mit der Steuerung der Schraubernussstellung über die gemessene Stromflussänderung aufgrund des erhöhten Drehmoments bei Erfassen des Speichennippels, nicht zuletzt wegen der langsam und sehr präzise ausführbaren Drehbewegung des N ippelschraubers, möglich.Deswegen kann auch mithilfe des Winkelgebers 87 die Speichenspannung innerhalb der Kombination einer Anziehbewegung des Speichennippels mit einer anschließenden, entgegengesetzt gedrehten Lockerungsbewegung durch die jeweils bei derselben Stellung des Winkelgebers 87 gemessenen Motorstromwerte von der Mikrocontrollereinheit das jeweilige Drehmoment gespeichert und ebenfalls dort über den bei Schraubverbindungen unter Zugspannung gegebenen einfachen allgemein nachlesbaren Zusammenhang* wie folgt errechnet werden:

Mt = tangentiales Drehmoment
Fu = Umfangskraft
Fa = axiale Spannkraft im Gewinde
$\alpha$ = Steigungswinkel des Gewindes
$\rho$ = Reibwinkel, jeweils gebildet mit der Resultierenden - aus der Normalkraft und der der jeweiligen Bewegung entgegengesetzten Reibungskraft - und der Normalkraft.
r = Flankenradius des Gewindes

Beim Anziehen des Speichennippels gilt:

$$\text{I:}\quad Mt\uparrow = r*Fu\uparrow = r*Fa*\tan(\rho + \alpha)$$

Beim Lockern des Speichennippels gilt:

$$\text{II:}\quad M\downarrow = r * Fu\downarrow = r * Fa *\tan(\rho - \alpha)$$

Da die axiale Speichenspannkraft Fa gesucht ist, die zweite Unbekannte, die durch den Reibwinkel $\rho$ gegebene, nicht exakt parametriesierbare Gewindereibung dagegen stört, können hier aufgrund der bei beiden Messungen gleichwirkend anzunehmenden Gewindereibung und aufgrund der Messung von Fa jeweils in derselben Nippelposition Gleichung I und II mithilfe bekannter Additionstheoreme nach $\rho$ aufgelöst, gleichgesetzt und für Fa in den einfachen und exakt programmierbaren Zusammenhang

III: Fa=Mtt - Mt$\downarrow$/2*tan $\alpha$

gebracht werden, da die bei Speichengewinden nach DIN 79012 insgesamt 3 möglichen Gewindesteigungen als jeweils vorwählbare Konstanten in den Mikrocontroller einprogrammiert werden können Lind somit ein unfTenäherter, lineare Zusammenhang der direkt über Motorstrom und/oder Motorspannung bzw. Motordrehzahl gemessenen Drehmomente Mt$\uparrow$ bzw. Mt$\downarrow$ zur Messauswertung zur Verfügung steht, wobei zur weiteren Fehlerminimierung Messwieder-holungen möglich sind. Der Vorteil dieser Speichenspannungsmessung gegenüber einer Spannungsmessung durch eine akustische Messung oder durch Ansetzen einer geeigneten Messvorrichtung an der Speiche liegt beidesmal in der Vermeidung von Speichenüberkreuzungs-einflüssen sowie von der fehlerbehafteten Wahl des Ansetzpunktes bei der Spannungsmessung.

*Fig.4d* zeigt die rotatorische Antriebsbewegung in Seitenansicht. Durch Pfeile dargestellt sind in Papierebene möglichen Bewegungen. Neu ist das Radialgelenk **90** mit an seiner beweglichen stabähnlicher Haltevorrichtung **91** angebrachtem Radialgelenk **92,** das gleichzeitig die Gleitführunsvorrichtung **68** radial beweglich hält. Ferner die Rotationsbahn **93,** welche das Radialgelenk **92** durch die motorgetriebene Bewegung über das Radialgelenk **90** beschreibt. Die Kipplagerung des Radialgelenks **90** ist in **Fig.4e** durch die Trägervorrichtung **99** mit linear verschiebbaren **101** Radiallageren **98,** welche über die Linearführungen **101** beweglich gelagert sind, beschrieben. Auf der Rotationsbahn **93** ist weiter der Anhaftpunkt **94** des Radialgelenks **92** an der Speiche **75** eingezeichnet, bei dem die gleivorrichtungsgeführte **68** Schraubnuss **71** zum ersten Mal zusammen mit den Haltevorrichtungen **69,** der Schraubnussführungsvorrichtung **72** sowie der Torsionsvorrichtung **70** achsparallel an der Speiche anliegt. Daraus ist ersichtlich, dass das Radialgelenk **92** in seiner Position **95** mit nippelaufsitzender gleitvorrichtungsgeführten Schraub-nuss das in **97** translatorisch elastisch gelagerte Kippgelenk **90** etwas von der Laufradradial-ebene **23** wegschiebt **96,** was für die reversierte Bewegung ein Abziehen der Schraubnuss vom Nippel in Nippelachsrichtung entlang der Speichenachse aufgrund der in **97** erzeugten Rückstell-kräfte ermöglicht.

*Fig.5:*
Skizziert sind der manuelle Nippelschrauber **102** in Seitenansicht sowie seine 3 Hauptkomponenten, einmal der Basiskörper **103,** bestehend aus der Speichenfühntngsvorrichtung **104** mit Schraubnuss **105,** Kontaktsteg **106** sowie beidseitigem Drucksensor **107** und Drehkopfführung **108,** zum anderen der Drehkopf **109** mit Speichenschlitz **112,** Andruckflanken **111** und Druck-kontaktschlitz **112,** schließlich die Aufsatzvorrichtung **113** mit Messanzeige **114,** den Signalvorrichtungen **115,116,** sowie der Speichenhaftvorrichtung **117.** Beim Anbringen des manuellen Nippelspanners **102** in Achsrichtung an die Laufradspeiche haftet der über eine achsradiale Gleitführungsvorriclatung **105** mit dem Basiskörper **103** beweglich befestigte Aufsatzvorrichtung **113** mit der Speichenhaftvorrichtung **117** an der Speiche an, sodass die Aufsatzvorrichtung **113** einmal eine fixe Basis relativ zu Drehbewegungen des Basiskörpers **103** mittels des Drehkopfs **109** bildet, zum anderen über die keilförmige vertikale Spitze **106** Torsion der Speiche anzeigt, wenn die Nippelschraubernuss **105** auf dem Speichennippel aufsitzt und diesen verdreht. Zur Messung der Speichenspannung mit dem Nippelschrauber **102** ist die Messung des Drehmoments beim Anziehen bzw. Lockern des unter Zugspannung stehenden Speichennippels in derselben Nippelstellung notwendig. Das Drehmoment wird über die Krafteinwirkung auf die radial zur Speichenachse angeordneten Drucksensoren mittels eines in der Aufsatzvorrichtung 113 ange-brachten Mikrochips **119** mithilfe der Kennlinien des Drucksensors sowie des linearen Zusammenhangs M = F x r berechnet. Dazu ist die Aufsatzvorrichtung **113** an ihrer Unterseite **120** über dem Schleifkontakt **121** des Basiskörpers **103** mit zwei in einer Winkelstellung von ca. +/- 75° relativ zum Speichenschlitz **110** angeordneten Punktkontaktenvorrichtungen eingerichtet. Für optimale Messergebisse am Messkontakt wird der Basiskörper mit dem Drehkopf jeweils über die 75°-Stellung hinaus ca 25° weitergedreht. An diesen Stellen befinden sich ebenfalls Punktkon-takte, sodass über den Mikrochip an die Signalgeber **115,116** 'grünes Licht' für die Zweitmessung sowie für eine insgesamterfolgreiche Messung gegeben wird, Die linearen Formeln für Anzugs-drehmoment und das Lockerungsdrehmoment des Speichennippels enthalten jeweils außer diesen Größen die Speichenspannung, die Gewindesteigung den Flankenradius sowie die Reibung zwischen Speichen-und Nippelgewinde. Da beim Anziehen und Lockern des Nippels beidesmal dieselbe Gewindereibung auftritt, kann diese beim Auflösen beider Gleichungen eliminiert und so die zweite Unbekannte in beiden Gleichungen, die Speichenspannung, direkt, ohne zusätzlich Linearisierungen vom Mikrochip **119** berechnet und auf dem Display **114** zur Anzeige gebracht werden. Zur Energieversorgung und Errichtung des Stromkreislaufs ist die Aufsatzvorrichtung **113** mit einer DC Batterie **122** versehen sowie an ihre Unterseite über einen permanenten Schleilkontakt **123** mit der Drehkopfoberseite verbunden. Der mit Lagerspiel zum Basiskörper eingerichtete Drehkopf **109** leitet den Strom bei Druckkontakt über einen der beiden Druck-sensoren **107** an den Schleifkontakt **121** weiter. Bis auf die Messung der Drehmomente mit den manuell kontaktierten Drucksensoren **107** ist die Physik des Schraubvorgangs dieselbe wie bereits bei der motorischen Nippelschraubermessung beschrieben. Außer mit den hier beschriebenen Drucksensoren **107** kann der manuelle Nippelschrauber **102** auch mit anderen elektronischen, zur Drehmomentmessung geeigneten Vorrichtungen eingerichtet sein.

**Erreichte Vorteile:**

Zentrierständer:

Sämtliche durch Justierarbeiten von Messvorrichtungen anfallenden Arbeitsabläufe und Messfehler werden vermieden. Beliebige Laufrad - bzw. Felgengrößen von 24 - 29 Zoll mit Nabeneinbauweiten von $\geq 90$ mm bis $\leq 160$ mm sind für die Seiten - und Höhenschlagsmessung der Feige Messung gleichzeitig in einer Radialebene des Laufrads und mittig zur Laufradachsmittelebene positioniert. Positionieren des Messkörpers und Anbingen der Messtaster in einem einzigen mechanisch geführten Bewegungsablauf. Nach dem Baukastenprinzip als Grundmodell bestückbar bis hin zum vollautomatisch gesteuerten Zentriergerät. Aufgrund des Baukastenprinzips der Gesamtkonstruktion ist der Zentrierständer mit Vorrichtungen zum Einbau motorgetriebener Nippelspanner, einer motorgesteuerten Antriebsrolle sowie optoelektronischer Distanzsensoren versehen.

Messkörper:

Simultanes Anbringen der beiden Seitentaster, bei gefurchten Felgenseiten Höhen- und Seitenschlagsmessung allein, über die Seitentaster möglich. Erhöhte Messgenauigkeit durch direkte Messwertanzeige ohne mechanischen Zwischenglieder. Simultanes Ablesen von Höhen - und Seitenschlag relativ zur Laufradachsmittelebene auf einem Skalenfeld. Durch Lupe über Skalenfeld Messgenauigkeit :9 0,05 mm ohne Zusatzgerät möglich. Detektieren von Messeinflüssen durch Unebenheiten der Felgenoberflächen aufgrund der Verkleinerung /Vergrößerung des Messspaltes der parallelen, relativ zur Laufradachsmittelebene anzeigendenMessplättchen möglich. Zuätzliche Bestückung mit elektronischen Distanzsensoren, graphischem Display sowie Zentriercomputer nach dem Baukastenpürinzip möglich.

Motorgetriebener Nippelspanner:

Die exakte Ausrichtung der Spannnuss in der Nippelachse mit passgenauer Positionierung über dem Speichennippel wird durch den beweglichen Gleitführungskörper des Nippelspanners möglich. Dadurch minimaler mechanischer Verschleiß und geringe Baugröße. Hohe Positioniergenauigkeit des Speichennippels aufgrund langsamer, direkt über die Stellung des Antriebsritzels gemessener Nippelbewegungen. Exaktes ermüdungsfreies Arbeiten auch in hohen Speichenspannungsbereichen. Direkte Messung der Speichenspannung ohne Zusatzgerät. Einsatz einer Getriebemotor-Schraubnuss-CPU-Kleindisplay-Kombination als Handgerät zum exakten Anzhiehen /Lockern der Speichennippel bzw. Messen der Speichenspannung bei gleichzeitiger Torsionskontrolle. Vermeiden von bei der Speichenspannungsmessung anfallenden Messfehlem durch überkreuzte Speichen und die Wahl des Speichenmesspunktes.
Speichenspannung des Laufrades durch hohe Arbeitsgenauigkeit des Nippelschraubers mit Mikrocontrollereinsatz beliebig vorwählbar. Geringer technischer Aufwand beim rotatorischen und translatorischen Bewegungsablauf. Vielfältiger Einsatz aufgrund geringer Baugröße möglich.

IV. Manueller Nippelspanner:

1. Vereinigung in einem Arbeitsgerät der folgenden, bisher getrennt ablaufenden Arbeitsschritte:

    a) Spannungsmessung der Laufradspeichen
    b) Torsionskontrolle der Speiche während dem Nippeldrehen
    c) manuelles Drehen des Speichennippels.

2. Die damit verbundene Zeit - und Kostenersparnis.

3. Steigerung der Messgenauigkeit durch Vermeidung bisheriger, sich z.Bsp. durch überkreuzte Speichen und Wahl des Speichenmesspunktes zwangsläufig ergebender Fehlerquellen.


**Patentansprüche**

**1.** Einrichtung zum Zentrieren und Nachspannen von eingespeichten Laufrädern mit einer Trägervorrichtung zum festen Einspannen der Laufradachse, mit einer Messvorrichtung zur Feststellung des Seiten - und Höhenschlags der Felge, wobei die Messvorrichtung einen abnehmbaren Messkörper (17,59) aufweist, mit einer Vorrichtung zum Anbringen eines motorgetriebenen Nippelspanners auf einen Speichennippel bzw. mit einer Vorrichtung (102) zum manuellen Drehen eines Speichennippels (78) zum Justieren der Speichenspannung, mit einer CPU - Steuereinheit mit interaktivem Display (20),
**dadurch gekennzeichnet,**

    - **dass** die Trägervorrichtung zum Einspannen der Laufradachse mit einer Zug- und Kippbewegungsvorrichtung für die Halteträger der Laufradachse eingerichtet ist,
    - **dass** die Trägervorrichtung zum Einspannen der Laufradachse nach dem Baukastenprinzip für die Messkörper (17,59), eine motorgesteuerte Antriebsrolle und den motorischen Nippelspanner erweiterbar eingerichtet ist,
    - **dass** der Messkörper (17) eine Vorrichtung zum Messen des Seiten- und Höhenschlags der Felge aufweist, die mit Messtastervorrichtungen für jeweils dasselbe laufradradial gelegene Felgensegment eingerichtet ist, bzw.
    - **dass** der Messkörper (59) eine Vorrichtung zum Messen des Seiten - und Höhenschlags der Felge aufweist, die mit einer optoelektronischen Vorrichtung zum Senden und Empfangen von Flächenstrahlen versehen ist,
    - **dass** sowohl der motorgetriebene als auch der manuelle Nippelspanner zur Messung der Speichenspannung das Drehmoment beim Anziehen bzw. Lockern des unter Zugspannung stehendes Speichennippels in derselben Nippelstellung messen,
    - **dass** die Vorrichtung zum Anbringen des motorgetriebenen Nippelspanners auf den Speichennippel mit einer Gleitführungsvorrichtung versehen ist,
    - **dass** die CPU-Steuereinheit (20) für eine Erweiterungen der Zentriereinrichtung mit elektronischen Geräten nach dem Baukastenprinzip eingerichtet ist.

**2.** Einrichtung nach Anspruch 1, **dadurch gekennzeichnet, dass** die Zug - und Kippbewegungsvorrichtung zum Einspannen des Laufrads symmetrisch zur Laufradradiatmittelebene (23) eingerichtet ist.

**3.** Einrichtung nach einem oder mehreren der oben genannten Ansprüche, **dadurch gekennzeichnet, dass** die Halterungen (11) zum Aufnehmen der Laufradachse und Einspannen der Nabenmuttern mit Radialgleitlagern parallel zur Laufradachsradialmittelebene (23) eingerichtet sind.

**4.** Einrichtung nach einem oder mehreren der oben genannten Ansprüche, **dadurch gekennzeichnet, dass** der Messkörper (17) mit einer Schnellspannvorrichtung zum Anbringen und Lösen der Messtaster von der Felge eingerichtet ist.

**5.** Einrichtung nach einem oder mehreren der oben genannten Ansprüche, **dadurch gekennzeichnet, dass** die Messkörper (17,59) parallel zur Laufradradialmittelebene in Radialrichtung des Laufrads beweglich eingerichtet sind.

**6.** Einrichtung nach einem oder mehreren der oben genannten Einsprüche, **dadurch gekennzeichnet, dass** die Messkörpervorrichtung (17) mit an den Messtastern angebrachten Messanzeigevorrichtungen, die einen parallelen Anzeigespalt symmetrisch zur Laufradachsradialmittelebene zum Unterscheiden zwischen Laufradfeigendefekten und Höhen - bzw. Seitenabweichungen der Laufradfelge bilden, eingerichtet ist.

**7.** Einrichtung nach einem oder mehreren der oben genannten Ansprüche, **dadurch gekennzeichnet, dass** die mit Gleitführungen versehene Einrichtung zum Messen von Höhenschlag mit der mit Gleitführungen versehenen Einrichtung zum Messen von Seitenschlag verbindbar ist, sodass die Einrichtung zum Messen für Seitenschlag durch die Einrichtung zum Messen für Höhenschlag bei Höhenschlägen mitgeführt werden kann.

8.  Einrichtung nach Anspruch 1, **dadurch gekennzeichnet, dass** der Messkörper (59) mit Vorrichtungen zum Senden und Empfangen von symmetrisch und orthogonal zur Laufradradialmittelebene verlaufenden Flächenstrahlen versehen ist, die sich in einem Strichsegment schneiden.

9.  Einrichtung nach einem oder mehreren der oben genannten Ansprüche, **dadurch gekennzeichnet, dass** der motorisch betriebene Nippelschrauber mit einer Gleitführungsvorrichtung zum achsparallelen Ausrichten der Spannnuss mit der Speichenachse versehen ist.

10. Einrichtung nach einem oder mehreren der oben genannten Ansprüche, **dadurch gekennzeichnet, dass** der motorische Nippelschrauber durch lineare Gleitvorrichtungen parallel zur Laufradradialebene beweglich eingerichtet ist.

11. Einrichtung nach einem oder mehreren der oben genannten Ansprüche, **dadurch gekennzeichnet, dass** der motorische Nippelschrauber mit einer translatorischen Bewegungsvorrichtung entlang der Speichenachse zum Anbringen an den Speichennippel eingerichtet ist.

12. Einrichtung nach einem oder mehreren der oben genannten Ansprüche, **dadurch gekennzeichnet, dass** der motorische Nippelschrauber durch lineare Gteitvorrichtungen parallel zur Laufradradialebene eingerichtet ist.

13. Einrichtung nach einem oder mehreren der oben genannten Ansprüche, **dadurch gekennzeichnet, dass** der motorische Nippelschrauber durch lineare Gleitvorrichtungen in Laufradachsialrichtung beweglich eingerichtet ist.

14. Einrichtung nach einem oder mehreren der oben genannten Ansprüche, **dadurch gekennzeichnet, dass** der motorische Nippelschrauber mit parallel zur Laufradradialebene gelegenen Radialgelenkvorrichtungen eingerichtet ist.

15. Einrichtung nach einem oder mehreren der oben genannten Ansprüche, **dadurch gekennzeichnet, dass** der motorische Nippelschrauber mit senkrecht zur Laufradradialebene gelegenen Radialgelenkvorrichtungen eingerichtet ist.

## Claims

1.  Device for centering and tensioning of spoked wheels with a support fixture for fixedly clamping the wheel axle, with a measuring device for determining the lateral and top eccentricity of the rim, wherein the measuring device has a removable measuring body (17,59), with a device for attaching a motor-driven nipple wrench to the spoke nipple; or with a device (102) for manually turning the spoke nipple (78) to adjust the spoke tension; with a CPU control unit having an interactive display (20);
    *characterised in that*:

    - the support fixture for clamping the wheel axle is arranged with a pulling and tilting movement device for the holder of the wheel axle;
    - the support fixture for clamping the wheel axle is expandably arranged, according to a modular principle, for the measuring bodies (17,59), a motor-controlled drive roller, and the motor-driven nipple wrench;
    - the measuring body (17) has a device for measuring the lateral and top eccentricity of the rim, which is configured with measuring probe devices for the respectively same rim segment extending wheel-radially; or
    - the measuring body (59) has a device for determining the lateral and top eccentricity of the rim, which is provided with an optoelectronic device for emitting and receiving surface radiation;
    - both the motor-driven and the manual nipple wrench for measuring the spoke tension measure the torque during tightening or loosening of the spoke nipple, subjected to tensile stress, in the same nipple position;
    - the device for attaching the motor-driven nipple wrench to the spoke nipple is provided with a sliding guide device;
    - the CPU control unit (20) for an extension of the centering device with electronic devices is configured according to a modular principle.

2.  Device according to claim 1, **characterised in that** the tensioning and tilting device for clamping the wheel is symmetrically aligned to the central radial plane of the wheel (23).

3. Device according to one or more of the preceding claims, **characterised in that** the holders (11) for accommodating the wheel axle and clamping the hub nuts are configured with radial sliding bearings parallel to the central radial plane of the wheel axle (23).

4. Device according to one or more of the preceding claims, **characterised in that** the measuring body (17) is equipped with a fast clamping device for attaching and detaching the measuring probes to and from the rim.

5. Device according to one or more of the preceding claims, **characterised in that** the measuring bodies (17,59) are movably arranged parallel to central radial plane of the wheel in the radial direction of the wheel.

6. Device according to one or more of the preceding claims, **characterised in that** the measuring body device (17) is provided with measurement display devices attached to the measuring probes that form a parallel display gap symmetrical to the central radial plane of the wheel, for distinguishing between wheel rim defects and vertical and lateral deviations of the rim.

7. Device according to one or more of the preceding claims, **characterised in that** the device, provided with sliding guides, for measuring the top eccentricity can be connected to device, provided with sliding guides, for measuring the lateral eccentricity, so that the device for measuring the lateral eccentricity can be moved along with the device for measuring the top eccentricity.

8. Device according to claim 1; **characterised in that** the measuring body (59) is provided with devices for sending and receiving surface beams that run symmetrically and orthogonally to the central radial plane of the wheel, which intersect in a line segment.

9. Device according to one or more of the preceding claims, **characterised in that** the motor-driven nipple driver is provided with a sliding guide device for parallel alignment of the wrench nut to the spoke axle.

10. Device according to one or more of the preceding claims, **characterised in that** the motor-driven nipple driver is arranged parallel to the central radial plane of the wheel by means of a linear sliding guide device.

11. Device according to one or more of the preceding claims, **characterised in that** the motor-driven nipple driver is configured with a translational movement device along the spoke axis for attachment to the spoke nipple.

12. Device according to one or more of the preceding claims, **characterised in that** the motor-driven nipple driver is aligned parallel to the central radial plane of the wheel by means of linear sliding devices.

13. Device according to one or more of the preceding claims, **characterised in that** the motor-driven nipple driver is movably arranged in the wheel axial direction by means of a linear sliding devices.

14. Device according to one or more of the preceding claims, **characterised in that** the motor-driven nipple driver is arranged with radial joint devices that run parallel to the radial plane of the wheel.

15. Device according to one or more of the preceding claims, **characterised in that** the motor-driven nipple driver is configured with radial joint devices that run perpendicular to the radial plane of the wheel.

**Revendications**

1. Installation utilisée pour centrer et retendre les roues au moyen d'un dispositif porteur pour un serrage fixe des essieux des roues, à l'aide d'un dispositif de mesure du faux rond et du voile des jantes. Le dit dispositif de mesure est équipé d'un corps de mesure démontable (17,59), avec un dispositif prévu pour l'installation du tendeur à rayons motorisé sur un écrou à rayons ou avec un dispositif (102) pour la rotation manuelle d'un écrou de rayon (78) afin d'ajuster le serrage, à l'aide d'une CPU - unité centrale et d'un affichage interactif (20)
*caractérisée par le fait que*

- le dispositif porteur destiné au serrage de l'essieu de roue est installé avec un dispositif de basculement et de traction pour les supports des essieux de roue,

- le dispositif porteur destiné au serrage des essieux de roues est installé de façon extensible, selon le principe modulaire prévu pour les corps de mesure (17, 59), un rouleau d'entraînement commandé par moteur et une douille de serrage motorisée,

- le corps de mesure (17) est équipé d'un dispositif de mesure du faux rond et du voile des jantes, lequel est installé avec des dispositifs à palpeur de mesure pour le même segment de jante correspondant, installé dans le sens radial de la roue, ou

- le corps de mesure (59) est équipé d'un dispositif de mesure du faux rond des jantes, lequel est installé avec un dispositif opto-électrique pour l'émission et la réception des rayonnements de surface,

- les tendeurs à rayons motorisé et manuel utilisés pour la mesure du serrage de l'écrou, mesurent également le couple lors du serrage ou du desserrage de l'écrou de rayon soumis à l'effet de la contrainte de la traction dans la même position,

- le dispositif d'installation du tendeur à rayons est doté, au niveau de l'écrou d'un rayon, d'un dispositif de guidage coulissant,

- l'unité de commande CPU (20) est installée de manière à garantir une extension de l'installation de centrage avec des dispositifs électroniques selon un principe modulaire.

**2.** Installation selon la revendication 1, **caractérisée par le fait que** le dispositif de traction et de basculement pour le serrage de la roue est installé symétriquement par rapport au plan médian du rayon de roue (23).

**3.** Installation selon une ou plusieurs revendications susmentionnées, **caractérisée par le fait que** les supports (11) de réception des essieux de roue et pour le serrage des écrous de moyeu avec des roulements à coulissement radial sont installés parallèlement au niveau médian du rayon d'essieu de la roue (23).

**4.** Installation selon une ou plusieurs revendications susmentionnées **caractérisée par le fait que** le corps de mesure (17) est installé avec un dispositif de serrage rapide pour l'installation et le desserrage du palpeur de mesure de la jante.

**5.** Installation selon une ou plusieurs revendications susmentionnées, **caractérisée par le fait que** les corps de mesure (17,59) sont installés, une configuration qui garantit leur mobilité, parallèlement au niveau médian des rayons de roue.

**6.** Installation selon une ou plusieurs revendications susmentionnées, **caractérisée par le fait que** le dispositif du corps de mesure (17) avec les dispositifs d'affichage de mesure installés sur les palpeurs de mesure et qui forment un intervalle d'affichage parallèle, est installé symétriquement au plan médian du rayon axial de la roue et des variations latérales ou en hauteur de la jante de roue, parallèlement au plan médian.

**7.** Installation selon une ou plusieurs revendications susmentionnées, **caractérisée par le fait que** le dispositif équipé de guidages coulissants pour mesurer le faux rond est combinable au dispositif de mesure du voile équipé de guidages coulissants, de telle manière que l'installation à mesurer le voile puisse être déplacée par le dispositif de mesure du faux rond.

**8.** Installation selon la revendication 1 **caractérisée par le fait que** le corps de mesure (59) est équipé d'émetteurs et de récepteurs de rayonnements de surface, qui se déplacent symétriquement et orthogonalement au plan médian du rayon de la roue, et qui se coupent dans un segment linéaire.

**9.** Installation selon une ou plusieurs revendications susmentionnées, **caractérisée par le fait que** le tournevis pour écrous motorisé est équipé d'un dispositif de guidage pour l'orientation parallèle à l'essieu du noyau de serrage avec l'axe des rayons.

**10.** Installation selon une ou plusieurs revendications susmentionnées, **caractérisée par le fait que** le tournevis pour écrous motorisé est installé, dans une configuration mobile, parallèlement au plan radial de la roue grâce à des dispositifs linéaires.

**11.** Installation selon une ou plusieurs revendications susmentionnées, **caractérisée par le fait que** le tournevis pour écrous motorisé est installé avec un dispositif de translation le long de l'axe des rayons pour faciliter l'installation sur l'écrou de rayon.

**12.** Installation selon une ou plusieurs revendications susmentionnées, **caractérisée par le fait que** le tournevis pour écrous motorisé est installé parallèlement au plan radial de la roue grâce à des dispositifs coulissant linéaires.

13. Installation selon une ou plusieurs revendications susmentionnées, **caractérisée par le fait que** le tournevis pour écrous motorisé est installé, dans une configuration mobile, dans le sens axial de la roue grâce à des dispositifs coulissants linéaires.

14. Installation selon une ou plusieurs revendications susmentionnées, **caractérisée par le fait que** le tournevis pour écrous motorisé est installé, dans une configuration mobile, dans le sens axial de la roue grâce à des dispositifs coulissants linéaires parallèlement au plan médian.

15. Installation selon une ou plusieurs revendications susmentionnées, **caractérisée par le fait que** le tournevis pour écrous motorisé est installé avec des dispositifs à articulations radiales disposés verticalement par rapport au plan radial de la roue.

Fig. 1

11    3
19
14
17
15
16

4 8 6 5 7 9    1    2    10 21 17 21 13 20 12

15

Fig. 2

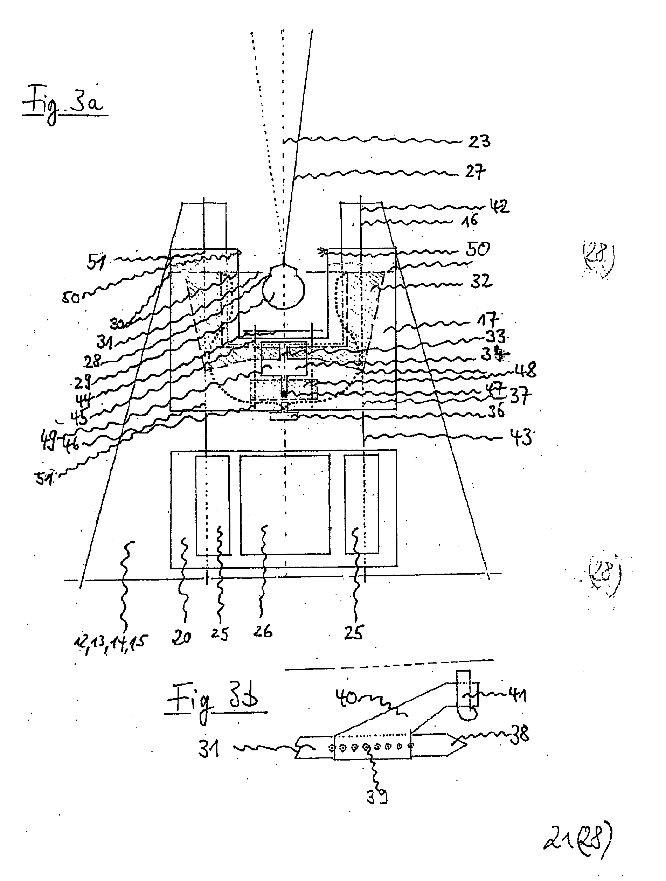

Fig. 3a

Fig 3b

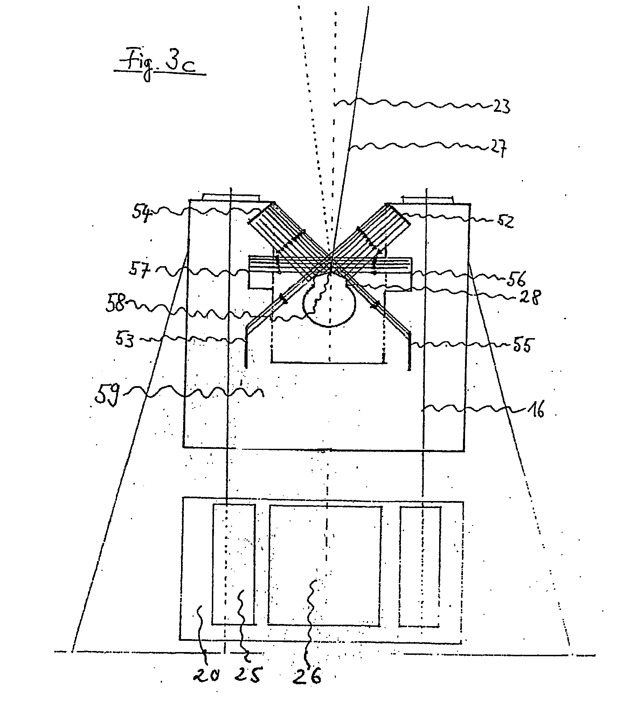

Fig. 3c

23

27

54

52

57

56

28

58

53

55

59

16

20  25  26

# Fig. 4a

Fig. 4b

75

66

73
68

72

76
77
78

61

87

Fig. 4c

EP 1 896 275 B1

Fig. 4d

22

Fig. 4e

97

101
100
98
96
99
99
98
100
101

Fig. 5

EP 1 896 275 B1

**EP 1 896 275 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1188583 A1